# EUROPEAN PATENT APPLICATION

(11) **EP 4 717 478 A1**
(43) Date of publication of application: **01.04.2026**
(21) Application number: 24203310.8
(22) Date of filing: 27.09.2024
(51) Int. Cl.: B60G 17/017, B60G 17/052, B60G 11/27, B60G 17/0195

(54) **A CONTROL UNIT AND A METHOD FOR MANAGING LOADING IMPACT IN A HEAVY-DUTY VEHICLE**

(71) Applicant: Volvo Truck Corporation, 405 08 Göteborg (SE)
(72) Inventor: PETTERSSON, Emil, 449 43 Nol (SE); JOHANSSON, Lars, 511 99 Sätila (SE); LARSSON, Lena, 426 74 Västra Frölunda (SE)
(74) Representative: Zacco Sweden AB

(57) **Abstract**

A control unit for managing loading impact in a heavy-duty vehicle equipped with an air compressor and a pneumatic suspension system comprising air springs wherein the control unit is configured to: obtain loading site data for one or more loading sites, wherein the loading site data comprises a location identifier indicating a loading site area associated with each loading site; obtain a current location identifier of the vehicle; compare the current location identifier to the loading site data to determine whether the vehicle is within a loading site area or not; and boost air pressure in the air springs, in response to the vehicle being within a loading site area, by activating an air compressor, wherein activating the air compressor supplies compressed air to the air springs to ensure a specified air pressure prior to loading impact.

## Description

### TECHNICAL FIELD

The disclosure relates generally to loading operations of a heavy-duty vehicle. In particular aspects, the disclosure relates to a control unit and a method for managing loading impact in a heavy-duty vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Heavy-duty vehicles engaged in loading operations, particularly those transporting heavy bulk materials, encounter significant challenges with air consumption when adjusting their suspension systems during loading. This places excessive demands on the compressor and air drier units, leading to potential overloading. Overloading of these systems can delay the truck's ability to reach the correct drive height and can also block the release of the parking brake until air pressure is sufficiently restored. Moreover, high air consumption significantly escalates energy and fuel usage.

Hence, there is a need for an improved management of the air compressor and the suspension system in heavy-duty vehicles during loading operations. A more efficient system could reduce air consumption, alleviating the load on the compressor and air drier units. Such a system could improve response times to load changes, quickly achieve a target drive height, and facilitate the immediate release of parking brakes.

### SUMMARY

According to a first aspect of the disclosure, a control unit for managing loading impact in a heavy-duty vehicle equipped with an air compressor and a suspension system comprising air springs is disclosed. The control unit is configured to obtain loading site data of one or more loading sites, wherein the loading site data comprises a location identifier indicating a loading site area associated with each loading site. The control unit is also configured to obtain a current location identifier of the vehicle, and compare the current location identifier to the loading site data to determine whether the vehicle is within the loading site area or not. In response to the vehicle being within the loading site area, the control unit is configured to boost air pressure in the air springs by activating the air compressor, wherein activating the air compressor supplies compressed air to the air springs to ensure a specified air pressure in the air springs prior to loading impact. The first aspect of the disclosure may seek to enhance the management of the air compressor and the air springs in heavy-duty vehicles during loading operations. The technical benefits may include more efficient operation of the air compressor and the ability to quickly reach a target ride height once loading is complete.

Optionally in some examples, including in at least one preferred example, the air compressor comprises an air tank, and activating the air compressor further comprises filling the air tank with compressed air. A technical benefit may include increased readiness to swiftly and efficiently supply compressed air to vehicle functions once loading is complete.

Optionally in some examples, including in at least one preferred example, the loading site data further comprises an expected load weight, and wherein the specified air pressure ensures a target ride height following the vehicle being loaded with the expected load weight. A technical benefit may include enabling the vehicle to quickly depart from the loading site, as the target ride height is reached immediately upon completion of loading.

Optionally in some examples, including in at least one preferred example, the air compressor comprises an air drier, and activating the air compressor further comprises activating the air drier. A technical benefit may include the capability to swiftly and efficiently supply compressed dry air to vehicle functions before, during and after loading, e.g., release of parking brakes.

Optionally in some examples, including in at least one preferred example, the heavy-duty vehicle comprises a lift axle, and the control unit is further configured to lower the lift axle in response to the vehicle being within a loading site area, thereby preparing the vehicle for loading impact. A technical benefit may include increased readiness to handle loading impacts, eliminating the need for manual control of the lift axle.

Optionally in some examples, including in at least one preferred example, the control unit is operatively connected to a human-machine interface, and further configured to alert the vehicle operator via the human-machine interface when the vehicle approaches a loading site area, thereby allowing the vehicle operator to override any automatic adjustments. A technical benefit may include allowing the vehicle operator to cancel any adjustments and preparations if vehicle is not due for loading.

Optionally in some examples, including in at least one preferred example, the control unit is further configured to obtain new loading site data automatically from available location identifiers during loading. A technical benefit may include eliminating the need to manually input or update loading site information. Moreover, the control unit may be operatively connected to a human-machine interface, and the control unit may be further configured to alert the vehicle operator via the human-machine interface when new loading site data is obtained, and receive a confirmation or a rejection of the new loading site data via the human-machine interface. A technical benefit may include the ability to avoid storing location data for loading sites that will not be revisited.

Optionally in some examples, including in at least one preferred example, the location identifier is at least one of geographic coordinates, a wireless network signal (e.g., 3GPP or WLAN), an RFID signal and a visual sign that interpretable by computer vision-based methods. A technical benefit may include the ability to determine proximity to a loading site using one or more location identifiers.

According to a second aspect of the disclosure, a heavy-duty vehicle equipped with a pneumatic suspension system comprising air springs, an air compressor and a control unit according to any of the examples of the first aspect of the disclosure. The second aspect of the disclosure may seek to enhance the management of the air compressor and the air springs in heavy-duty vehicles during loading operations. The technical benefits may include more efficient operation of the air compressor and the ability to quickly reach a target ride height once loading is complete.

According to a third aspect of the disclosure, a method for managing loading impact for a heavy-duty vehicle equipped with an air compressor and a pneumatic suspension system comprising air springs is disclosed. The method comprises obtaining loading site data of one or more loading sites, wherein the loading site data comprises a location identifier indicating a loading site area associated with each loading site. The method also comprises obtaining a current location identifier of the vehicle, and comparing the current location identifier to the loading site data to determine whether the vehicle is within a loading site area or not. Lastly, in response to the vehicle being within a loading site area, boosting air pressure level in the air springs by activating an air compressor, wherein activating comprises supplying compressed air to the air springs to ensure a specified air pressure in the air springs prior to loading impact. The technical benefits may include more efficient operation of the air compressor and the ability to quickly reach a target ride height once loading is complete.

Optionally in some examples, including in at least one preferred example, the air compressor comprises an air tank, and activating the air compressor further comprises filling the air tank with compressed air. A technical benefit may include increased readiness to swiftly and efficiently supply compressed air to vehicle functions once loading is complete.

Optionally in some examples, including in at least one preferred example, the loading site data further comprises an expected load weight, and wherein the specified air pressure ensures a target ride height following the vehicle being loaded with the expected load weight. A technical benefit may include enabling the vehicle to quickly depart from the loading site, as the target ride height is reached immediately upon completion of loading.

Optionally in some examples, including in at least one preferred example, the air compressor comprises an air drier, and wherein activating the air compressor further comprises activating the air drier. A technical benefit may include the capability to swiftly and efficiently supply compressed dry air to vehicle functions before, during and after loading, e.g., release of parking brakes.

Optionally in some examples, including in at least one preferred example, the heavy-duty vehicle comprises a lift axle, and the method further comprises lowering the lift axle in response to the vehicle being within a loading site area, thereby preparing the vehicle for loading impact. A technical benefit may include increased readiness to handle loading impacts, eliminating the need for manual control of the lift axle.

Optionally in some examples, including in at least one preferred example, the method further comprises alerting the vehicle operator when the vehicle approaches a loading site area via a human-machine interface, thereby allowing the vehicle operator to abort any automatic adjustments. A technical benefit may include that it allows the vehicle operator to cancel any adjustments and preparations if the vehicle is not due for loading.

Optionally in some examples, including in at least one preferred example, the method further comprises obtaining new loading site data automatically from available location identifiers during loading operations. A technical benefit may include eliminating the need to manually input or update loading site information. Moreover, the method may further comprise alerting the vehicle operator via a human-machine interface of new loading site data, and receiving a confirmation or a rejection of the new loading site data via the human-machine interface. A technical benefit may include the capability to avoid storing location data for loading sites that will not be revisited.

Optionally in some examples, including in at least one preferred example, the location identifier is at least one of geographic coordinates, a wireless network signal (e.g., 3GPP or WLAN), an RFID signal and a visual sign interpretable by computer vision-based methods. A technical benefit may include the ability to determine proximity to a loading site using one or more location identifiers.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
FIG. 1 illustrates a heavy-duty vehicle with a control unit, wherein the vehicle is in the proximity of a loading site and its associated loading site area, according to an example.
FIG. 2 illustrates top, side, and rear views of a heavy-duty vehicle equipped with a pneumatic suspension system comprising air springs, an air compressor and a control unit, according to an example.
FIG. 3 is a flowchart of a method for managing loading impact for a heavy-duty vehicle.
FIG. 4A schematically illustrates a control unit.
FIG. 4B shows an example of a computer program product.
FIG. 5 is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

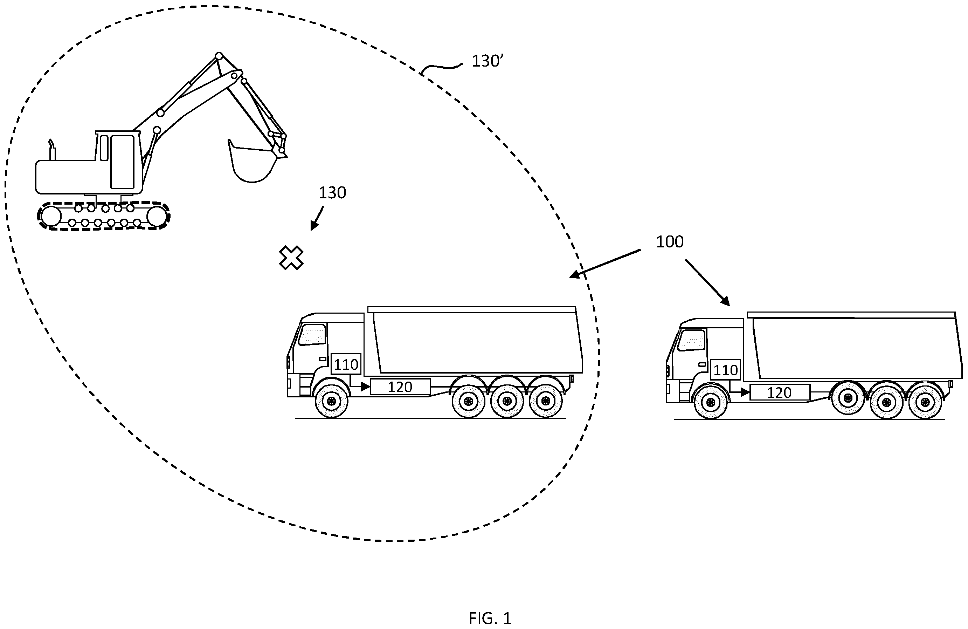

FIGS. 1-2 illustrate a first aspect of the disclosure relating to a control unit 110 for managing loading impact in a heavy duty vehicle 100 equipped with a pneumatic suspension system comprising an air compressor 120 and air springs 230A, 230B, 230C, 230D, 230E, 230F, 230G, 230H.

FIG. 1 illustrates an example of the disclosure in which a heavy-duty vehicle 100 is en route to a loading site 130, located within a designated loading site area 130'. Upon arrival at the loading site, the vehicle is anticipated to experience a sudden impact from loading, e.g. from loading heavy bulk materials such as gravel. To effectively manage and adapt to the abrupt addition of weight during loading, the heavy-duty vehicle 100 is equipped with a control unit 110 configured for managing the air compressor 120, the air springs 230A, 230B, 230C, 230D, 230E, 230F, 230G, 230H of the suspension system. The control unit 110 is further detailed in subsequent sections.

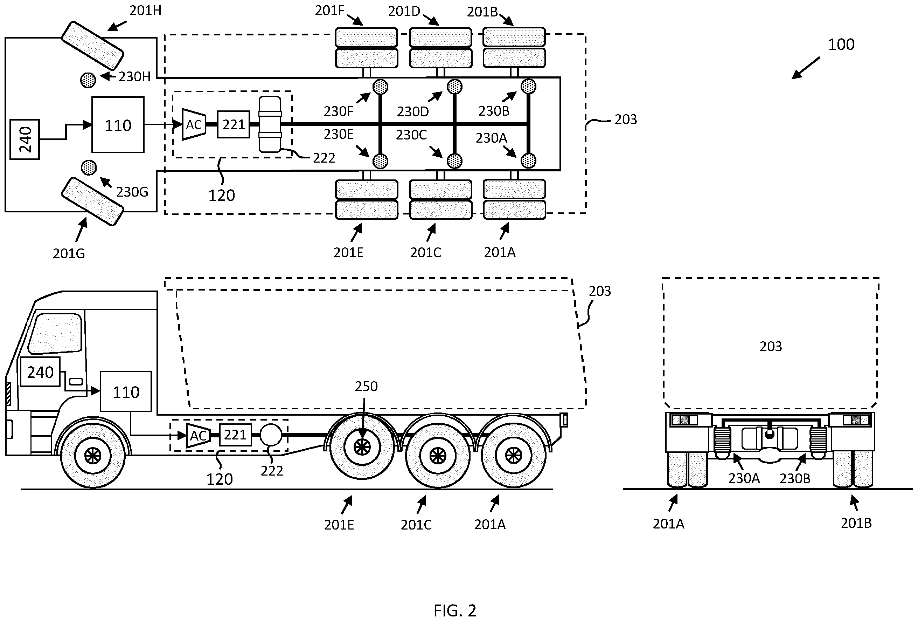

FIG. 2 offers a more detailed depiction of the heavy-duty vehicle 100, including top, side, and rear views, according to an example. Typically, the heavy-duty vehicle 100A comprises driven wheels 201A, 201B, 201C, 201D, 201E, 201F on the rear axles and steerable wheels 201G, 201H on the front axle. A control unit 110 manages functions such as regulating the pneumatic suspension system and controlling air pressure levels in the air springs 230A, 230B, 230C, 230D, 230E, 230F, 230G, 230H, utilizing the air compressor 120, and may also oversee the operation of a lift axle 250. The air compressor (AC) 120 may further comprise an air drier 221 and an air tank 222 for efficient operation of the suspension system as well as other pneumatic functions of the vehicle. The control unit 110 may be operatively connected to a human-machine interface 240 configured to receive input from the vehicle operator. It should be noted that the vehicle 100 of FIGS. 1-2 depict a tipper truck with a tipper body 203, yet the disclosure applies to any vehicle susceptible to loading impacts and equipped with air springs.

The control unit 110 is configured to obtain loading site data for one or more loading sites 130, wherein the loading site data comprises a location identifier indicating a loading site area 130' associated with each loading site 130. The control unit 110 may be configured to obtain and store loading site data of several loading sites, which may be loading sites frequently visited by the vehicle. In one example, the location identifier may be one of geographic coordinates, a wireless network signal, an RFID signal and a computer vision-based location identifier. In an outdoor environment, the geographic coordinates, indicating an area on a map, may be used with advantage, as GPS signals are readily available in outdoor environments, and the vehicle typically already includes a GPS receiver as part of its navigation system. In underground or indoor environments, the presence of a wireless network signal (e.g., WLAN or 3GPP) may be utilized to indicate the loading site area 130'. Similarly, entry to a loading site may be detected by an RFID signal or a visual sign (e.g., a road sign) that can be processed using computer vision-based methods.

The control unit 110 is further configured to obtain a current location identifier of the vehicle 100 and compare the current location identifier to the loading site data to determine whether the vehicle 100 is within a loading site area 130' or not. For example, the control unit may compare the vehicle's geographic coordinates with stored geographic coordinates of the loading site area 130' to determine whether the vehicle is located within the loading site area 130' or not. Alternatively, the control unit 110 may compare a detected a wireless network signal (e.g., WLAN or 3GPP) with a stored network registered as a location identifier, where the presence of the network signal defines the loading site area 130'. Other alternatives include the detection of an RFID signal or a visual sign to confirm that the vehicle is located within the loading site area 130'.

In response to the vehicle 100 being within the loading site area 130', the control unit is configured to boost air pressure in the air springs 230A, 230B, 230C, 230D, 230E, 230F, 230G, 230H by activating an air compressor 120 of the heavy-duty vehicle 100, wherein activating the air compressor supplies compressed air to the air springs to ensure a specified air pressure in the air springs prior to loading impact. The specified air pressure may be a default air pressure level suitable for loading operations, such that the heavy-duty vehicle will be prepared for any sudden addition of weight. Additionally, the specified air pressure may be an air pressure level determined by an expected load weight. The expected load weight may be a default value or a value provided by the vehicle operator. In some examples, the loading site data may comprise an expected load weight. By boosting air pressure in the air springs based on the expected load weight, the specified air pressure in the air springs may be set to a level that corresponds to a target ride height for the expected load weight. Thus, the specified air pressure ensures a target ride height following the vehicle being loaded with the expected load weight. This is advantageous because the ride height does not need to be adjusted after loading is completed, or only minimally adjusted if the actual load weight differs from the expected load weight. The control unit may store a look-up table or a function that maps the specified air pressure and the expected load weight to a corresponding ride height. This mapping may be derived from simulations or operational testing conducted on the vehicle or on other vehicles of the same model. This approach enables efficient operation of the air compressor and the ability to quickly reach a target ride height once loading is complete. It should be noted that the target ride height may typically be a default value or a value provided by the vehicle operator. Moreover, if sensor data for the air pressure in the air springs is unavailable, other proxies of the specified air pressure, such as ride height, may be used instead.

In some examples, the air compressor 120 may further comprise an air tank 222, and activating the air compressor 120 in response to the vehicle 100 being within the loading site area 130' may further comprise filling up the air tank 222 with compressed air. An advantage of filling up the air tank 222 is that it enables the swift and efficient delivery of compressed air to various vehicle functions after the loading of vehicle 100 has been completed.

In some examples, the air compressor 120 may further comprise an air drier 221, and activating the air compressor 120 in response to the vehicle 100 being within the loading site area 130' may further comprise activating the air drier 221. This ensures a supply of compressed dry air is available for vehicle functions that require it before, during, and after loading. For instance, if the air compressor and air dryer are not adequately prepared for the loading impact, there is a risk of compressor overload, which could delay the release of parking brakes and lead to costly interruptions in operations at the loading site.

In some examples, the heavy-duty vehicle may further comprise a lift axle 250, and the control unit 110 may be configured to lower the lift axle 250 in response to the vehicle 100 being within a loading site area 130', thereby further automating the preparations for loading impact. An advantage of this approach is that the need for manual control of the lift axle is eliminated and the additional stability increases readiness to handle the addition of more weight during loading operations. The lift axle 250 may be pneumatic and thus operated by compressed air, but may alternatively be hydraulic.

In some examples, the control unit 110 may also be operatively connected to a human-machine interface 240, and further configured to alert the vehicle operator via the human-machine interface when the vehicle approaches a loading site area 130'. The human-machine interface 240 may, for example, be a dashboard-mounted display or touchscreen panel in the vehicle 100. This feature allows the vehicle operator to override any automatic adjustments, which may be beneficial if the vehicle is at the loading site for other purposes than loading.

In some examples, the control unit 110 may be further configured to obtain new loading site data automatically from available location identifiers during loading. This eliminates the need to manually input or update loading site information. Moreover, the control unit 110 may be operatively connected to a human-machine interface, and the control unit 110 may be further configured to alert the vehicle operator via the human-machine interface 240 when new loading site data is obtained, and receive a confirmation or a rejection of the new loading site data via the human-machine interface 240. This example offers the advantage of not needing to store location data for loading sites that will not be revisited. Typically, the human-machine interface 240 is integrated as a dashboard-mounted display or touchscreen panel in the vehicle 100.

FIGS. 1-2 also illustrate a second aspect of the disclosure relating a heavy-duty vehicle 100 equipped with a pneumatic suspension system with air springs 230A, 230B, 230C, 230D, 230E, 230F, 230G, 230H an air compressor 120, and a control unit according to any of the examples of the first aspect of the disclosure.

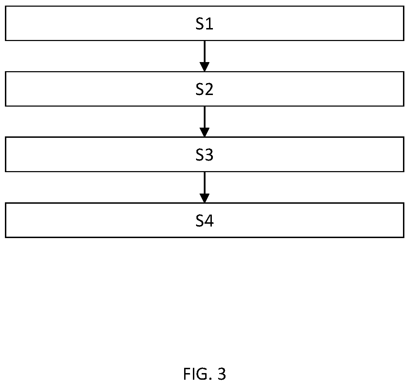

FIG. 3 illustrates a third aspect of the disclosure relating to a method for managing loading impact for a heavy-duty vehicle 100 equipped with an air compressor 120 and a pneumatic suspension system comprising air springs 230A, 230B, 230C, 230D, 230E, 230F, 230G, 230H. The method comprises obtaining S1 loading site data, obtaining S2 a current location identifier, comparing S3 the current location identifier to the loading site data, and boosting S4 air pressure in the air springs. It should be noted that any of the aforementioned aspects relating to the control unit 110 and the vehicle-trailer combination 100 are also applicable to the method.

The method comprises obtaining S1 loading site data of one or more loading sites 130, wherein the loading site data comprises a location identifier indicating a loading site area 130' associated with each loading site 130. This may involve obtaining and storing loading site data of several loading sites, which may be loading sites frequently visited by the vehicle. In one example, the location identifier may be one of geographic coordinates, a wireless network signal, an RFID signal and a computer vision-based location identifier. In an outdoor environment, the geographic coordinates, indicating an area on a map, may be used with advantage, as GPS signals are readily available in outdoor environments, and the vehicle typically already includes a GPS receiver as part of its navigation system. In underground or indoor environments, the presence of a wireless network signal (e.g., WLAN or 3GPP) may be utilized to indicate the loading site area 130'. Similarly, entry to a loading site may be detected by an RFID signal or a visual sign that can be processed using computer vision-based methods.

The method further comprises obtaining S2 a current location identifier of the vehicle 100, and comparing S3 the current location identifier to the loading site data to determine whether the vehicle is within a loading site area 130' or not. For example, comparing may involve comparing the vehicle's geographic coordinates with stored geographic coordinates of the loading site area 130' to determine whether the vehicle is located within the loading site area 130' or not. Alternatively, comparing may involve comparing a detected wireless network (e.g., WLAN or 3GPP) with a stored network as a location identifier, where the presence of the network signal defines loading site area 130'. Other alternatives include the detection of an RFID signal or a visual sign to confirm that the vehicle is located within this specified area.

In response to the vehicle 100 being within the loading site area 130', the method further comprises boosting S4 air pressure level in the air springs 230A, 230B, 230C, 230D, 230E, 230F, 230G, 230H by activating the air compressor 120, wherein activating the air compressor 120 supplies compressed air to the air springs to ensure a specified air pressure in the air springs prior to loading impact. The specified air pressure may be a default air pressure level suitable for loading operations, such that the heavy-duty vehicle will be prepared for any sudden addition of weight. Additionally, the specified air pressure may be an air pressure level determined by an expected load weight. The expected load weight may be a default value or a value provided by the vehicle operator. In some examples, the loading site data may comprise an expected load weight. By boosting air pressure in the air springs based on an expected load weight, the specified air pressure in the air springs may be set to a level that corresponds to a target ride height for the expected load weight. Thus, the specified air pressure ensures a target ride height following the vehicle being loaded with the expected load weight. This is advantageous because the ride height does not need to be adjusted after loading is completed, or only minimally adjusted if the actual load weight differs from the expected load weight. The control unit may store a look-up table or a function that maps the specified air pressure and the expected load weight to a corresponding ride height. This mapping may be derived from simulations or operational testing conducted on the vehicle or on other vehicles of the same model. This method enables efficient operation of the air compressor and the ability to quickly reach a target ride height once loading has been completed.

In some examples, the air compressor 120 may further comprise an air tank 222, and activating the air compressor 120 in response to the vehicle 100 being within the loading site area 130' may further comprise filling up the air tank 222 with compressed air. An advantage of filling up the air tank 222 is that it enables the swift and efficient delivery of compressed air to various vehicle functions after the loading of vehicle 100 has been completed.

In some examples, the air compressor 120 may further comprise an air drier 221, and activating the air compressor 120 in response to the vehicle 100 being within the loading site area 130' may further comprise activating the air drier 221. This ensures a supply of compressed dry air is available for vehicle functions that require it before, during, and after loading. For instance, if the air compressor and air dryer are not adequately prepared for the loading impact, there is a risk of compressor overload, which could delay the release of parking brakes and lead to costly interruptions in operations at the loading site.

In some examples, the heavy-duty vehicle may further comprise a lift axle 250, and the method further comprises lowering the lift axle in response to being within a loading site area 130', thereby further automating the preparations for loading impact. An advantage of this approach is that the need for manual control of the lift axle is eliminated, and the additional stability increases readiness to handle the addition of more weight during loading operations.

In some examples, the method further comprises alerting the vehicle operator when the vehicle approaches a loading site area 130' via a human-machine interface. The human-machine interface 240 may, for example, be a dashboard-mounted display or touchscreen panel in the vehicle 100. This feature allows the vehicle operator to override any automatic adjustments, which may be beneficial if the vehicle is at the loading site for other purposes than loading.

In some examples, the method further comprises obtaining new loading site data automatically from available location identifiers during loading operations. This eliminates the need to manually input or update loading site information. Moreover, the method may further comprise alerting the vehicle operator via the human-machine interface 240 when new loading site data is obtained, and receiving a confirmation or a rejection of the new loading site data via the human-machine interface 240. This example offers the advantage of not needing to store location data for loading sites that will not be revisited. Typically, the human-machine interface 240 would be integrated as a dashboard-mounted display or touchscreen panel in the vehicle 100.

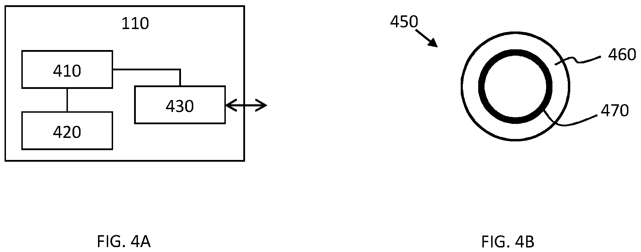

FIG. 4A schematically illustrates, in terms of a number of functional units, the components of a control unit 110 according to aspects of the discussions and methods disclosed herein. This control unit 110 may typically be comprised in the vehicle 100. Processing circuitry 410 is provided using any combination of one or more of a suitable central processing unit CPU, multiprocessor, microcontroller, digital signal processor DSP, etc., capable of executing software instructions stored in a computer program product, e.g., in the form of a storage medium 420. The processing circuitry 410 may further be provided as at least one application specific integrated circuit ASIC, or field programmable gate array FPGA.

Particularly, the processing circuitry 410 is configured to cause the control unit 110 to perform a set of operations, or steps, such as the methods discussed in connection to FIG. 3. For example, the storage medium 420 may store the set of operations, and the processing circuitry 410 may be configured to retrieve the set of operations from the storage medium 420 to cause the control unit 110 to perform the set of operations. The set of operations may be provided as a set of executable instructions. Thus, the processing circuitry 410 is thereby arranged to execute methods as herein disclosed.

The storage medium 420 may also comprise persistent storage, which, for example, can be any single one or combination of magnetic memory, optical memory, solid state memory or even remotely mounted memory.

The control unit 110 may further comprise an interface 430 for communications with at least one external system, such as the air compressor 120 and the suspension system. As such the interface 430 may comprise one or more transmitters and receivers, comprising analogue and digital components and a suitable number of ports for wireline or wireless communication.

The processing circuitry 410 controls the general operation of the control unit 110, e.g., by sending data and control signals to the interface 430 and the storage medium 420, by receiving data and reports from the interface 430, and by retrieving data and instructions from the storage medium 420. Other components, as well as the related functionality, of the control node are omitted in order not to obscure the concepts presented herein.

FIG. 4B shows an example of a computer program product. A computer readable medium 460 carrying a computer program 470 comprising program code means for performing the steps of aforementioned method when said program product is run on a computer or on processing circuitry 410 of a control unit 110.

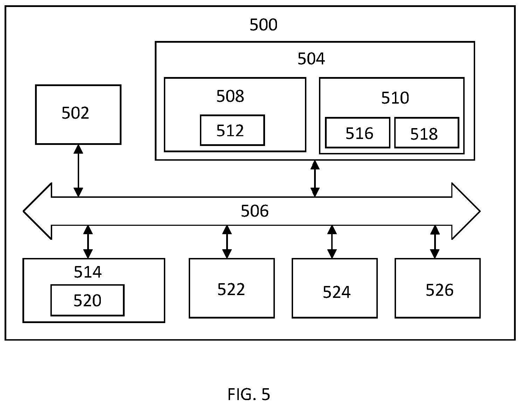

FIG. 5 is a schematic diagram of a computer system 500 for implementing examples disclosed herein. The computer system 500 is adapted to execute instructions from a computer-readable medium to perform these and/or any of the functions or processing described herein. The computer system 500 may be connected (e.g., networked) to other machines in a LAN, an intranet, an extranet, or the Internet. While only a single device is illustrated, the computer system 500 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 500 may comprise at least one computing device or electronic device capable of including firmware, hardware, and/or executing software instructions to implement the functionality described herein. The computer system 500 may include processing circuitry 502 (e.g., processing circuitry including one or more processor devices or control units), a memory 504, and a system bus 506. The computer system 500 may include at least one computing device having the processing circuitry 502. The system bus 506 provides an interface for system components including, but not limited to, the memory 504 and the processing circuitry 502. The processing circuitry 502 may include any number of hardware components for conducting data or signal processing or for executing computer code stored in memory 504. The processing circuitry 502 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 502 may further include computer executable code that controls operation of the programmable device.

The system bus 506 may be any of several types of bus structures that may further interconnect to a memory bus (with or without a memory controller), a peripheral bus, and/or a local bus using any of a variety of bus architectures. The memory 504 may be one or more devices for storing data and/or computer code for completing or facilitating methods described herein. The memory 504 may include database components, object code components, script components, or other types of information structure for supporting the various activities herein. Any distributed or local memory device may be utilized with the systems and methods of this description. The memory 504 may be communicably connected to the processing circuitry 502 (e.g., via a circuit or any other wired, wireless, or network connection) and may include computer code for executing one or more processes described herein. The memory 504 may include non-volatile memory 508 (e.g., read-only memory (ROM), erasable programmable read-only memory (EPROM), electrically erasable programmable read-only memory (EEPROM), etc.), and volatile memory 510 (e.g., random-access memory (RAM)), or any other medium which can be used to carry or store desired program code in the form of machine-executable instructions or data structures and which can be accessed by a computer or other machine with processing circuitry 502. A basic input/output system (BIOS) 512 may be stored in the non-volatile memory 508 and can include the basic routines that help to transfer information between elements within the computer system 500.

The computer system 500 may further include or be coupled to a non-transitory computer-readable storage medium such as the storage device 514, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 514 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 514 and/or in the volatile memory 510, which may include an operating system 516 and/or one or more program modules 518. All or a portion of the examples disclosed herein may be implemented as a computer program 520 stored on a transitory or non-transitory computer-usable or computer-readable storage medium (e.g., single medium or multiple media), such as the storage device 514, which includes complex programming instructions (e.g., complex computer-readable program code) to cause the processing circuitry 502 to carry out actions described herein. Thus, the computer-readable program code of the computer program 520 can comprise software instructions for implementing the functionality of the examples described herein when executed by the processing circuitry 502. In some examples, the storage device 514 may be a computer program product (e.g., readable storage medium) storing the computer program 520 thereon, where at least a portion of a computer program 520 may be loadable (e.g., into a processor) for implementing the functionality of the examples described herein when executed by the processing circuitry 502. The processing circuitry 502 may serve as a controller or control system for the computer system 500 that is to implement the functionality described herein.

The computer system 500 may include an input device interface 522 configured to receive input and selections to be communicated to the computer system 500 when executing instructions, such as from a keyboard, mouse, touch-sensitive surface, etc. Such input devices may be connected to the processing circuitry 502 through the input device
interface 522 coupled to the system bus 506 but can be connected through other interfaces, such as a parallel port, an Institute of Electrical and Electronic Engineers (IEEE) 1394 serial port, a Universal Serial Bus (USB) port, an IR interface, and the like. The computer system 500 may include an output device interface 524 configured to forward output, such as to a display, a video display unit (e.g., a liquid crystal display (LCD) or a cathode ray tube (CRT)). The computer system 500 may include a communications interface 526 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1: A control unit 110 for managing loading impact in a heavy-duty vehicle 100 equipped with a pneumatic suspension system comprising air springs 230A, 230B, 230C, 230D, 230E, 230F, wherein the control unit 110 is configured to: obtain loading site data for one or more loading sites 130, wherein the loading site data comprises a location identifier indicating a loading site area 130' associated with each loading site 130; obtain a current location identifier of the vehicle 100; compare the current location identifier to the loading site data to determine whether the vehicle 100 is within a loading site area 130' or not; and boost air pressure in the air springs 230A, 230B, 230C, 230D, 230E, 230F, 230G, 230H, in response to the vehicle 100 being within a loading site area 130', by activating the air compressor 120, wherein activating the air compressor 120 supplies compressed air to the air springs to ensure a specified air pressure in the air springs prior to loading impact.

Example 2: The control unit 110 of example 1, wherein the air compressor (120) further comprises an air tank (222), and wherein activating the air compressor (120) further comprises filling the air tank (222) with compressed air.

Example 3: The control unit 110 of any of examples 1-2, wherein the loading site data further comprises an expected load weight, and wherein the specified air pressure ensures a target ride height following the vehicle being loaded with the expected load weight.

Example 4: The control unit 110 of any of examples 1-3, wherein the heavy-duty vehicle comprises a lift axle, and wherein the control unit 110 is further configured to lower the lift axle in response to the vehicle 100 being within a loading site area 130', thereby preparing the vehicle for loading impact.

Example 5: The control unit 110 of any of examples 1-4, wherein the control unit is operatively connected to a human-machine interface, and wherein the control unit 110 is configured to alert the vehicle operator via the human-machine interface 240 when the vehicle approaches a loading site area 130', thereby allowing the vehicle operator to override any automatic adjustments.

Example 6: The control unit 210 of any of examples 1-5, wherein the control unit is further configured to obtain new loading site data automatically from available location identifiers during loading.

Example 7: The control unit 210 of example 6, wherein the control unit 110 is operatively connected to a human-machine interface, and wherein the control unit 110 is configured to alert the vehicle operator via the human-machine interface 240 of new loading site data; and receive a confirmation or a rejection of the new loading site data via the human-machine interface 240.

Example 8: The control unit 210 of any of examples 1-7, wherein the location identifier is at least one of geographic coordinates, a wireless network signal, an RFID signal and a visual sign.

Example 9: The control unit 210 of any of clams 1-8, wherein the air compressor 120 further comprises an air drier 221, and wherein activating the air compressor 120 further comprises activating the air drier 221.

Example 10: A heavy-duty vehicle 100 equipped with a pneumatic suspension system comprising air springs 230A, 230B, 230C, 230D, 230E, 230F, an air compressor 120, and a control unit according to any of examples 1-9.

Example 11: A method for managing loading impact for a heavy-duty vehicle 100 equipped with a pneumatic suspension system comprising air springs 230A, 230B, 230C, 230D, 230E, 230F, the method comprising obtaining S1 loading site data of one or more loading sites 130, wherein the loading site data comprises a location identifier indicating a loading site area 130' associated with each loading site 130; obtaining S2 a current location identifier of the vehicle 100; comparing S3 the current location identifier to the loading site data to determine whether the vehicle within a loading site area 130' or not; and boosting S4 air pressure in the air springs 230A, 230B, 230C, 230D, 230E, 230F, 230G, 230H, in response to the vehicle 100 being within a loading site area 130', by activating the air compressor 120, wherein activating the air compressor 120 supplies compressed air to the air springs to ensure a specified air pressure in the air springs prior to loading impact.

Example 12: The method of example 11, wherein the air compressor 120 comprises an air tank 222, and wherein activating the air compressor 120 further comprises filling the air tank 222 with compressed air.

Example 13: The method of any of examples 11-12, wherein the loading site data further comprises an expected load weight, and wherein the specified air pressure ensures a target ride height following the vehicle being loaded with the expected load weight.

Example 14: The method of any of examples 11-13, wherein the heavy-duty vehicle comprises a lift axle, and wherein the method further comprises lowering the lift axle in response to the vehicle being within a loading site area 130', thereby preparing the vehicle for loading impact.

Example 15: The method unit of any of examples 11-14, wherein the method further comprises alerting the vehicle operator when the vehicle approaches a loading site area 130' via a human-machine interface 240, thereby allowing the vehicle operator to abort any automatic adjustments.

Example 16: The method of any of examples 11-15, wherein the method further comprises obtaining new loading site data automatically from available location identifiers during loading operations.

Example 17: The method of example 16, wherein the method further comprises: alerting the vehicle operator via a human-machine interface 240 of new loading site data; and receiving a confirmation or a rejection of the new loading site data via the human-machine interface 240.

Example 18: The method of any of examples 11-17, wherein the location identifier is at least one of geographic coordinates, a wireless network signal, an RFID signal and a visual sign.

Example 19: A computer program product comprising program code for performing, when executed by the processing circuitry, the method of any of examples 11-18.

Example 20: A non-transitory computer-readable storage medium comprising instructions, which when executed by the processing circuitry, cause the processing circuitry to perform the method of any of examples 11-18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A control unit (110) for managing loading impact in a heavy-duty vehicle (100) equipped with an air compressor (120) and a pneumatic suspension system comprising air springs (230A, 230B, 230C, 230D, 230E, 230F, 230H, 230G), wherein the control unit (110) is configured to:
obtain loading site data for one or more loading sites (130), wherein the loading site data comprises a location identifier indicating a loading site area (130') associated with each loading site (130);
obtain a current location identifier of the vehicle (100);
compare the current location identifier to the loading site data to determine whether the vehicle (100) is within a loading site area (130') or not; and
boost air pressure in the air springs (230A, 230B, 230C, 230D, 230E, 230F, 230G, 230H), in response to the vehicle (100) being within a loading site area (130'), by activating the air compressor (120), wherein activating the air compressor (120) supplies compressed air to the air springs to ensure a specified air pressure prior to loading impact.

2. The control unit (110) of claim 1, wherein the air compressor (120) further comprises an air tank (222), and wherein activating the air compressor (120) further comprises filling the air tank (222) with compressed air.

3. The control unit (110) of any of claims 1-2, wherein the loading site data further comprises an expected load weight, and wherein the specified air pressure ensures a target ride height following the vehicle being loaded with the expected load weight.

4. The control unit (110) of any of claims 1-3, wherein the heavy-duty vehicle comprises a lift axle, and wherein the control unit (110) is further configured to lower the lift axle (250) in response to the vehicle (100) being within a loading site area (130'), thereby preparing the vehicle for loading impact.

5. The control unit (110) of any of claims 1-4, wherein the control unit is operatively connected to a human-machine interface, and wherein the control unit (110) is configured to alert the vehicle operator via the human-machine interface (240) when the vehicle approaches a loading site area (130'), thereby allowing the vehicle operator to override any automatic adjustments.

6. The control unit (110) of any of claims 1-5, wherein the control unit is further configured to obtain new loading site data automatically from available location identifiers during loading.

7. The control unit (110) of any of claims 1-6, wherein the location identifier is at least one of geographic coordinates, a wireless network signal, an RFID signal and a visual sign.

8. A heavy-duty vehicle (100) equipped with a pneumatic suspension system comprising air springs (230A, 230B, 230C, 230D, 230E, 230F, 230G, 230H), an air compressor (120), and a control unit according to any of claims 1-7.

9. A method for managing loading impact for a heavy-duty vehicle (100) equipped with an air compressor (120) and a pneumatic suspension system comprising air springs (230A, 230B, 230C, 230D, 230E, 230F, 230G, 230H), the method comprising:
obtaining (S 1) loading site data of one or more loading sites (130), wherein the loading site data comprises a location identifier indicating a loading site area (130') associated with each loading site (130);
obtaining (S2) a current location identifier of the vehicle (100);
comparing (S3) the current location identifier to the loading site data to determine whether the vehicle within a loading site area (130') or not; and
boosting (S4) air pressure in the air springs (230A, 230B, 230C, 230D, 230E, 230F, 230G, 230H), in response to the vehicle (100) being within a loading site area (130'), by activating the air compressor (120), wherein activating the air compressor (120) supplies compressed air to the air springs to ensure a specified air pressure prior to loading impact pact.

10. The method of claim 9, wherein the air compressor (120) comprises an air tank (222), and wherein activating the air compressor (120) further comprises filling the air tank (222) with compressed air.

11. The method of any of claims 9-10, wherein the loading site data further comprises an expected load weight, and wherein the specified air pressure ensures a target ride height following the vehicle being loaded with the expected load weight.

12. The method of any of claims 9-11, wherein the heavy-duty vehicle comprises a lift axle, and wherein the method further comprises lowering the lift axle (250) in response to the vehicle (100) being within a loading site area (130'), thereby preparing the vehicle for loading impact.

13. The method of any of claims 9-12, wherein the method further comprises obtaining new loading site data automatically from available location identifiers during loading operations.

14. The method of any of claims 9-13, wherein the location identifier is at least one of geographic coordinates, a wireless network signal, an RFID signal and a visual sign.

15. A non-transitory computer-readable storage medium comprising instructions, which when executed by the processing circuitry, cause the processing circuitry to perform the method of any of claims 9-14.
